# EUROPEAN PATENT APPLICATION

(11) **EP 2 319 739 A2**
(43) Date of publication of application: **11.05.2011**
(21) Application number: 09810165.2
(22) Date of filing: 24.08.2009
(51) Int. Cl.: B60S 1/38

(54) **FLAT VEHICULAR WIPER WITH HYDRAULIC SHOCK-ABSORBING UNIT**

(30) Priority: 25.08.2008 KR 20080083000; 25.08.2008 KR 20080083006
(71) Applicant: Cap Corporation, Dalseo-gu, Daegu 742-320 (KR)
(72) Inventor: KO, Byung Hun, Sangju-city Gyeongsangbok-do 770-190 (KR); PARK, Se Heon, Seoul 135-904 (KR)
(74) Representative: Pulieri, Gianluca Antonio
(86) International application number: PCT/KR2009/004693
(87) International publication number: WO 2010/024560

(57) **Abstract**

The present invention relates to a flat vehicular wiper comprising a flat spring member and a brushing unit, more specifically to a flat vehicular wiper with a hydraulic shock-absorbing unit for evenly transmitting pushing pressure to a glass surface. The present invention comprises a tuber unit in close contact with a glass surface of a vehicle, and a flat spring member which is installed in the rubber unit and of which elasticity is regulated in order to contact the rubber unit closely to the glass surface. The lower portion of the rubber unit includes a brushing unit contacting the glass surface. The flat spring member is installed on top of the brushing unit of the rubber unit. The rubber unit includes a hydraulic shock-absorbing chamber which is formed in a space between the lower portion of the flat spring member and the brushing unit.

## Description

### Technical Field

The present invention relates to a flat wiper, and in particular to a flat vehicular wiper with a hydraulic shock-absorbing unit in which a pushing pressure is evenly applied to a glass surface in a wiper structure formed of a flat spring member and a wiping member.

### Background Art

A vehicular wiper is engaged to a wiper arm and operates like a wiper arm receiving a driving force of a wiper motor via a link mechanism reciprocates, with a blade of which one surface is formed of rubber being detachably secured to a wiper frame for thereby wiping glass. The vehicular wiper is an important element in a vehicle operation.

Various wipers are under developments for the purpose of decreasing manufacture costs along with function and productivity improvements.

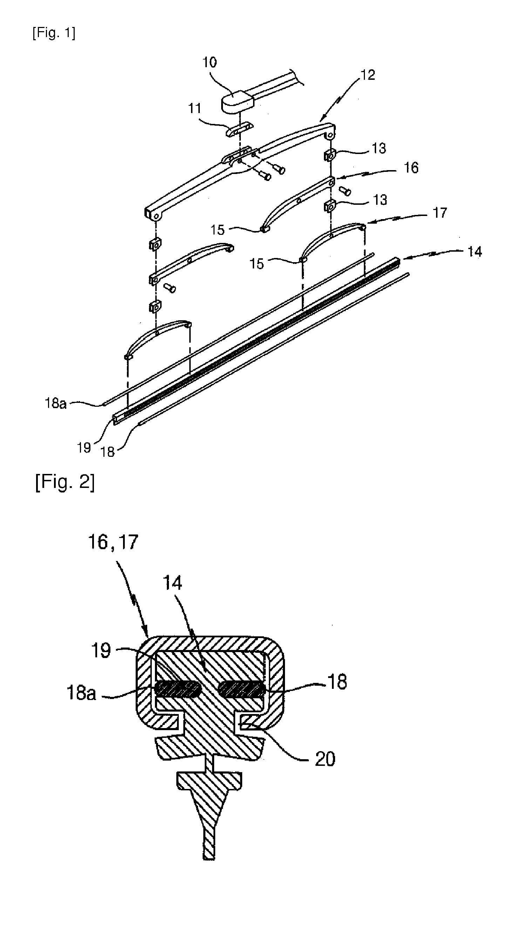

As shown in Figure 1, a conventional wiper comprises a frame body 12 engaged to a wiper arm 10 via an adapter 11, and a blade 14 which is secured along the frame body 12 and comes into contact with a glass surface for thereby wiping a glass surface, but has problems in its function and performance as compared to a complicated structure and is hard to manufacture.

The conventional wiper comprises a frame body 12 to which an adapter 11 secured to a wiper arm 10 is engaged, a first frame 16 having an insertion groove 15 formed at an inner side for receiving a blade 14 therein so as to secure a blade 14 into both directions of the frame body 12, a second frame 17 which is symmetrically engaged to both end portions of the first frame 16 by using a rivet joint 13 with even weights, a pair of elastic spring rails 18 and 18a which are secured to both sides of a blade 14 so as to wipe a glass surface while coming into close contact with a glass surface with the aid of an elastic force generated like a certain elastic force is applied to a blade 14 when first engaging a blade 14 to first and second frames 16 and 17, and a slide groove 19 formed at a blade for inserting the spring rails 18 and 18a.

The frame body 12 is secured to the wiper arm 10 with an adapter 11 by fixing the blade 14 with the spring rails 18 and 18a and fixes the first and second frames 16 and 17. The first and second frames 16 and 17 each including the frame body 12 have holes formed in the course of process so as to facilitate drainage and reduce weights. As shown in Figure 2, the blade 14 has a stepped portion 20 formed along both side surfaces for an engagement with the first and second frames 16 and 17 and a slide groove 19 for guiding the spring rails 18 and 18a.

The conventional wiper structure is constituted like the blade 14 and the spring rails 18 and 18a are assembled to the frame body 12, which is made of a steel plate in a press molding method, and the first and second frames 16 and 17, respectively. However, the connection portions and engaged portions of each element are frozen during winter season, which causes an operation problem. The elastic force of the blade changes, which results in a bad wiping effect on a glass surface. Since the portions for elastically pushing a blade are formed of dots, it is impossible to evenly apply to the entire portions of the blade, which results in a wrong wiping operation due to a separation phenomenon caused by a lifting since abrasions do not evenly occur. A lot of parts are assembled in the course of manufacture, a plurality of molds are needed, and it is hard to control qualities, and the number of assembling processes increases, an assembling cost a lot.

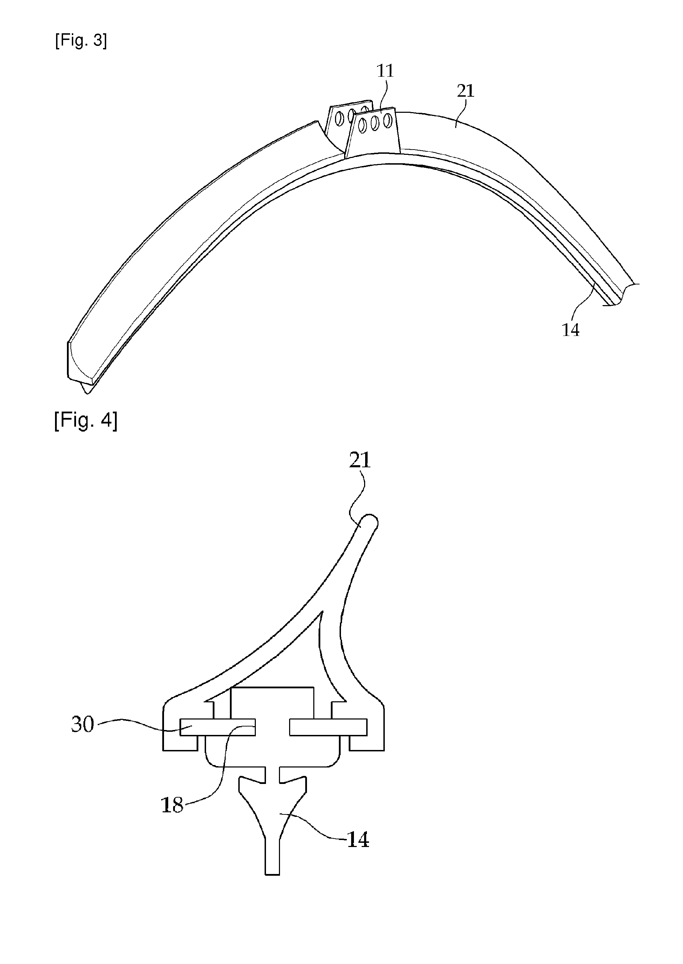

As shown in Figures 3 and 4, a conventional wiper is made in such a manner that a steel plate frame engaged to a wiper arm 10 via an adapter 11 and a frame supporting the blade 14 are not separately formed, and an elastic member 30 is inserted into the blade 14, and an outer side is covered by a rubber cover 21. In the above structure, a slide groove 19 is longitudinally formed in both directions of the blade 14, and the elastic member 30 is inserted in both directions, and the outer side portions are covered by a rubber cover 21 so as to obtain an air spoiler function and an elastic force while hiding the elastic member 30. The above conventional wiper partially overcomes the problems of a conventional wiper by using a fewer number of parts and a wrong operation due to the freezing of parts which are common problems in the conventional wiper while resolving the complicated construction problems.

However since the wiper is made like a portion between an elastic member 30 and a blade 14 is made of only rubber, the elastic force of the elastic member 30 is directly transferred due to a physical property of rubber. So, in the course of manufacturing the elastic member 30 with a certain curvature, uneven portions might be formed in a longitudinal direction, which results in a change in pressure, so the change of rubber is directly transferred via solid rubber without absorbing shocks. At this time, when the pressure of a corresponding portion is less, a wiping performance becomes worse, and when the pressure is too high, the durability of product decreases. So it is impossible to manufacture a wiper having an even quality by which a wiping performance can maintain excellently.

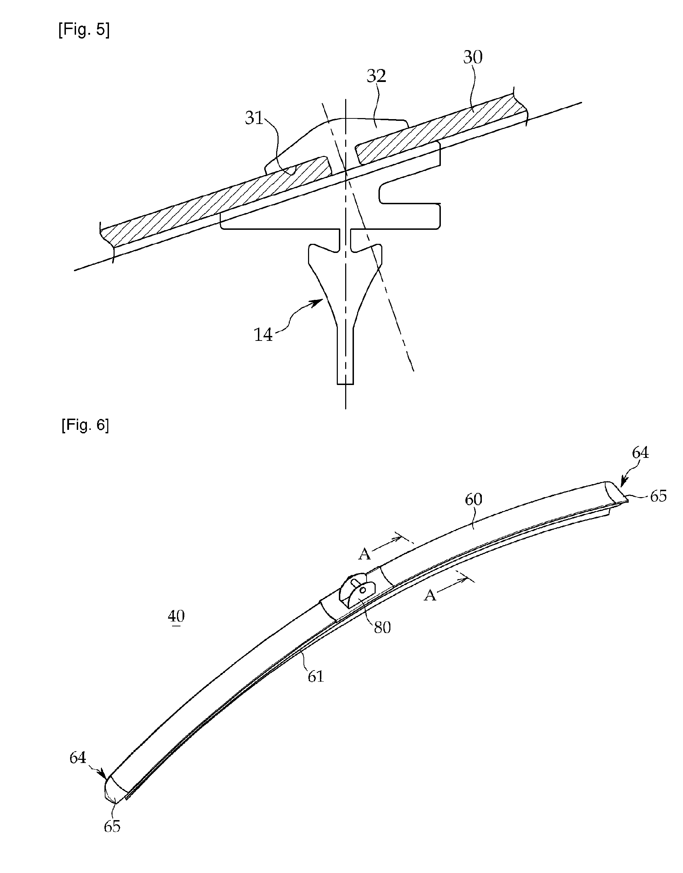

As shown in Figure 5, the wiper rubber blade of Korean patent registration number 0662629 is characterized in that an upper side of a blade 14 is equipped with a head part 32 having a slide groove 31 engaged to an elastic member 30, and the slide groove of the head part 32 has a slope engaged depending on the position of the elastic member 30, and the center of the slide groove 31 has a slope deviating from the vertical axis about the vertical axis, and a lower side of the blade 14 is formed of a wiping portion contacting with the glass surface, so there are a specific slope depending on the shape of the elastic member 30 for thereby enhancing a close contact performance with respect to the glass surface and a wiping performance, while reducing the resistance to air contacting on the surface of the wiper with the aid of such slopes.

The wiper structure of Figure 5 can improve the problems of various conventional wipers of Figures 1 to 4, but the pushing pressure of the elastic member 30 is transferred to the wiping part in an inclined direction, and the uneven elastic force of the elastic member 30 is directly transferred to the wiping part without being reduced and absorbing shocks, which leads to worsening a wiping performance due to a change in pressure and leads to decreasing durability. Since the elastic member 30 is exposed to the outside, antirust process on the surface is needed.

### Disclosure of Invention

Accordingly, it is an object of the present invention to provide a flat vehicular wiper which has an air pressure absorbing part for evenly transferring a pushing pressure on a glass surface with the aid of an air pressure absorbing function even when an uneven pushing pressure is formed with respect to a glass surface and a wiping part has a pushing pressure in an inclined direction in a vehicular wiper blade having a flat spring member and a wiping part, while overcoming the problems encountered in the conventional art.

It is another object of the present invention to provide a flat vehicular wiper which can be mass-produced at a lower price along with providing an uneven elastic force pressure absorbing function, not being frozen, and in which it is possible to manufacture a good quality wiper blade in various shapes, and a coating process is not needed, which leads to shortening a manufacture process, and a mass production is possible.

To achieve the above objects, there is provided a flat vehicular wiper with a hydraulic shock-absorbing unit in a flat wiper which includes a rubber part coming close contact with a glass surface of a vehicle, and a flat spring member which is installed at the rubber pat and has a set elastic force so that the rubber part comes into close contact with the glass surface, which comprises:

a wiping part which is formed at a lower side of the rubber part and comes into close contact with the glass surface,

with the flat spring member being installed at an upper side of the wiping part of the rubber part, and

with the rubber part being equipped with an air pressure absorbing part formed between a lower side of the flat spring member and the wiping part in a hollow space shape.

A flat vehicular wiper with a hydraulic shock-absorbing unit in a flat wiper which includes a rubber part coming close contact with a glass surface of a vehicle, and a flat spring member which is installed at the rubber pat and has a set elastic force so that the rubber part comes into close contact with the glass surface which comprises:

a heat part which is provided at an upper side of the rubber part and is inclined in the direction of a lower edge portion of the glass surface, and a wiping part is formed at a lower side of the rubber part while coming contact with the glass surface,

wherein said flat spring member is installed at an upper side of the wiping part of the rubber part and is inclined toward the lower edge portion of the glass surface, and

said rubber part includes an air pressure absorbing part which is formed between the lower side of the flat spring member and the wiping part in a hollow space shape.

### Advantageous effects

The present invention to provide a flat vehicular wiper which has an air pressure absorbing part for evenly transferring a pushing pressure on a glass surface with the aid of an air pressure absorbing function even when an uneven pushing pressure is formed with respect to a glass surface and a wiping part has a pushing pressure in an inclined direction in a vehicular wiper blade having a flat spring member and a wiping part, for thereby achieving an excellent glass surface wiping performance, wherein the flat vehicular wiper can be mass-produced at a lower price along with providing an uneven elastic force pressure absorbing function, not being frozen, and in which it is possible to manufacture a good quality wiper blade in various shapes, and a coating process is not needed, which leads to shortening a manufacture process, and a mass production is possible.

### Brief Description of the Drawings

The present invention will become better understood with reference to the accompanying drawings which are given only by way of illustration and thus are not limitative of the present invention, wherein;

Figures 1 is a disassembled perspective view illustrating a conventional wiper so as to explain a common wiper structure;

Figure 2 is a vertical cross sectional view of a wiper of Figure 1;

Figure 3 is a perspective view for explaining a conventional wiper structure;

Figure 4 is a vertical cross sectional view of a wiper of Figure 3;

Figure 5 is a vertical cross sectional view of a conventional slope type flat wiper;

Figure 6 is a perspective view of a flat wiper according to an embodiment of the present invention;

Figure 7 is a disassembled perspective view illustrating a flat wiper according to an embodiment of the present invention;

Figure 8 is a cross sectional view of a normal type flat wiper and taken along like A-A of Figure 5 according to an embodiment of the present invention;

Figure 9 is a cross sectional view illustrating a normal type flat wiper according to another embodiment of the present invention;

Figure 10 is a cross sectional view illustrating a slope type flat wiper according to an embodiment of the present invention;

Figure 11 is a cross sectional view of a slope type flat wiper according to another embodiment of the present invention.

<Descriptions of reference numerals of major elements>

50: flat spring member

60: rubber part

61: wiping part

62: air pressure absorbing part

63: head part of rubber part

64: blocking part

65: end cap

66: space part

67: blade

68: neck part

69: wing part

70: glass surface

80: adapter

81: adapter groove

### Modes for carrying out the invention

The preferred embodiments of the present invention will be described with reference to the accompanying drawings.

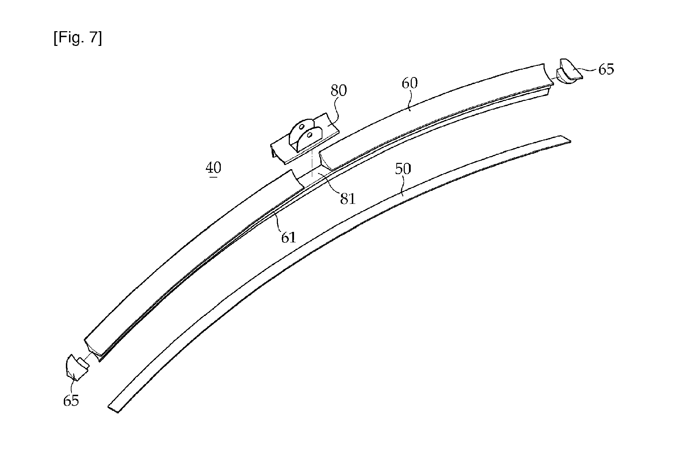

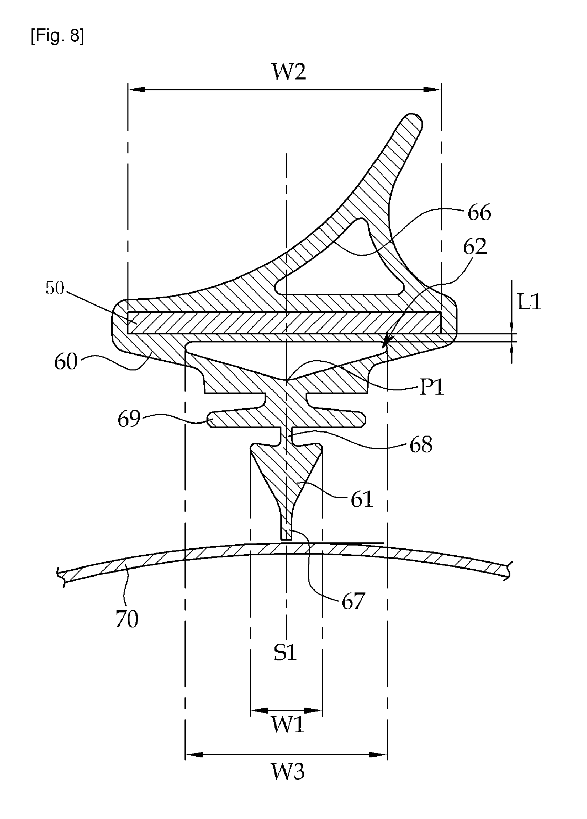

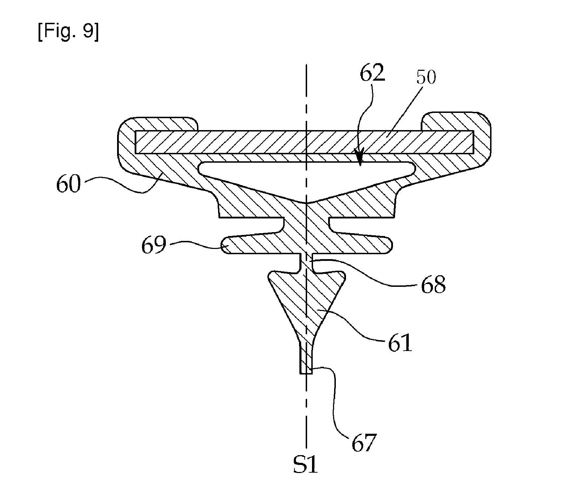

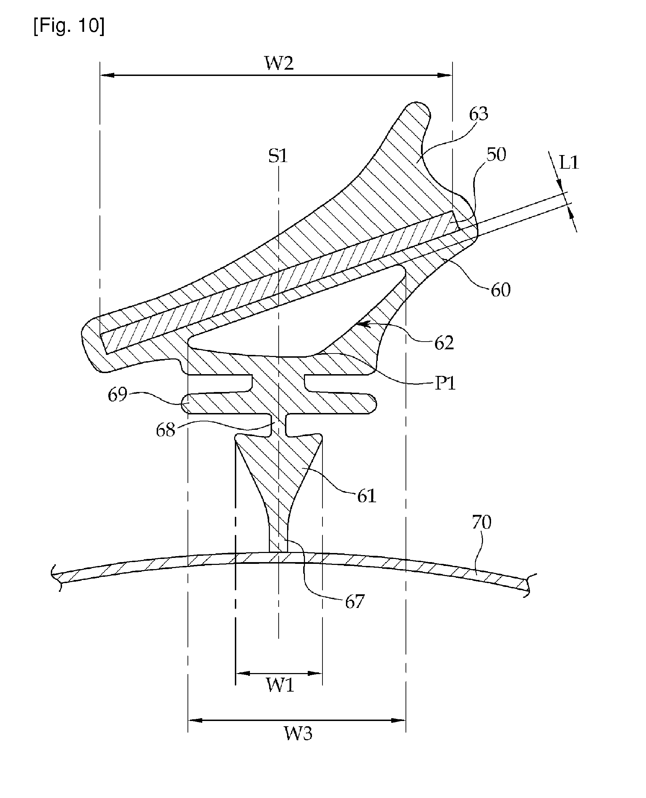

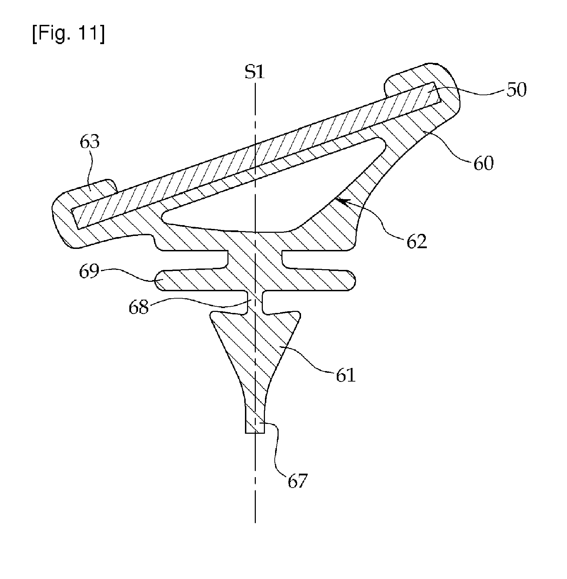

Figure 6 is a perspective view of a flat wiper according to an embodiment of the present invention, and Figure 7 is a disassembled perspective view illustrating a flat wiper according to an embodiment of the present invention. In particular, Figures 8 and 9 are views illustrating a normal type flat wiper according to the present invention. Meanwhile, Figures 10 and 11 are views illustrating a slope type flat wiper according to the present invention.

The flat wiper according to the present invention is constituted in such a manner that it comes into elastically close contact with a glass surface 70 by transferring an elastic force of the flat spring member 50 to a rubber part 60. The flat spring member 50 has a set elastic force so that the wiping part 61 can supply an even force to the glass surface 70.

As major elements, there are provided a lengthy flat spring 50 formed in a longitudinal direction, and a rubber part 60 which has a wiping part 61 receiving an elastic force of the flat spring member 50 for wiping a glass surface 70 while coming close contact with the glass surface 70, and a rubber part 60 which allows the wiping part 61 to closely contact with the glass surface 70.

The rubber part 60 is formed surrounding the outer sides of the flat spring member 50, with its upper side being equipped with a space part 66 so as to reduce the amount of rubber.

The rubber part 60 comprises an air pressure absorbing part 62 formed between the lower side of the flat spring member 50 and the wiping part 61 in a hollow shape.

It is preferred that the air pressure absorbing pat 62 is symmetrically formed in the left and right sides with respect to the wiping part 61, with the width W3 of the same being smaller than the width W2 of the flat spring member and being larger than the maximum width W1 of the closely contacting portion of the wiping part.

The air pressure absorbing part 62 is longitudinally formed along a length direction of the cross section of the flat spring member 50 so as to receive an even pressure of the flat spring member 50 so that the pressure pushed by the flat spring member 50 is evenly applied to the glass surface from an upper side to a lower side.

Both ends of the air pressure absorbing part 62 are equipped with the blocking part 64 for blocking the air from discharging, and the blocking part 64 is integral to the rubber part 60.

The blocking part 64 formed at both sides of the air pressure absorbing part 62 might be constituted to block the air of the air pressure absorbing part 62 from being discharged to the outside with the end cap 65 being inserted into both end portions of the air pressure absorbing part 62.

It is preferred that the portion between the flat spring member 50 and the air pressure absorbing part 62 has an interval L1 in a range of 0mm to 10mm.

The wiping part 61 comprises a neck part 68 which corresponds to a portion extended from the rubber part 60 and allows a smooth and sharp blade 67 portion and the blade 67 to elastically and smoothly contact with the glass surface 70 and a wing part 69. The wiping part 61 might be implemented in various forms. For example, the neck part 68 might be equipped with a wing part 69 or might be selectively equipped with the same.

Reference numeral 80 represents an adaptor engaged to the wiper arm, and 81 represents an adapter groove formed at the rubber part 60.

The slope type flat wiper according to the present invention is formed like the flat spring member 50 is installed at a slope. As described in the conventional art descriptions of Figure 5, it is installed at a slope depending on the flat spring member 50 for thereby enhancing a close contact performance and a wiping performance on a glass surface of a vehicle, and the resistance of the air contacting with the surface of the wiper can be reduced with the aid of slope. The detailed descriptions of the characteristics and functions of the flat spring member 50 installed at a slope will be omitted since such constructions are related to just the types of wipers.

In the slope type flat wiper according to the present invention, the upper side of the rubber part 60 is equipped with a slope head part 63 toward the lower edge portion of the glass surface 70, and the lower side of the rubber part is equipped with the wiping part 61 contacting with the glass surface 70.

The flat spring member 50 is installed at the upper side of the wiping part 61 of the rubber part 60 and is installed at a slope toward the lower edge portion of the glass surface 70.

The rubber part 60 might surround the outer side of the flat spring member 50.

The rubber part 60 comprises an air pressure absorbing part 62 which is formed in a space between the lower side of the flat spring member 50 and the wiping part 61.

The other construction of the slop type flat wipe according to the present invention corresponds to the normal type flat wiper of the present invention, so the detailed descriptions will be omitted.

The operations and effects of the flat wiper according to the present invention will be described.

The flat wiper 40 according to the present invention comes into elastic contact with the glass surface 70 by supplying the elastic force of the flat spring member 50 to the rubber part 60.

The flat spring member 50 has a set elastic force so as to allow the wiping part 61 to apply pressure with an even force and distribution to the glass surface 70. In the course of the manufacture of the flat spring member 50, it is actually hard to provide an even elastic force of the flat spring member 50 to the wiping part 61 by adjusting the elastic force to have an accurate curvature while corresponding to the curvature of the glass surface 70. Namely, the curvature of the flat spring member 50 made in a strap shape has a limit in expressing an equal distribution pressure in line with the curvature of the glass surface 70.

In the course of manufacture while adapting the curvature to the strap shape flat spring member 50, when small uneven portions occurs in a longitudinal direction, which leads to causing a change in pressure. The change in pressure is directly transferred to the wiping part 61 via a solid rubber without shock absorption or other compensation, and when the pressure at a certain portion is small, the portion between the glass surface 70 and the wiping part 61 lifts upward while forming a gap, so the wiping performance is lowered, and when pressure is relatively higher as compared to other portions, the friction with the glass surface 70 increases, and abrasion fast occurs, and the durability is decreased.

The portion between the flat spring member 50 and the wiping part 61 is extended with a rubber, so the elastic force of the flat spring member 50 is directly transferred via the physical construction of rubber.

The present invention is basically directed to transferring an elastic pressure and maintaining the same so that the pushing pressure of the flat spring member 50 can be evenly distributed. Even when the curvature of the flat spring member 50 does not correspond to the curvature of the glass surface 70 or when the elastic force of the flat spring member 50 is uneven, even pressure can be transferred to the wiping part 61. An air pressure absorbing part 62 of a pocket shape is formed at the rubber part 60 in which the flat spring member 50 is installed, for an air cushion function, so that the elastic pressure, which was supposed to be unevenly transferred to the wiping part 61, can be adjusted and transferred to the wiping part 61.

The structure for installing the flat spring member 50 in the rubber part 60 or engaging the same might be in various methods and structures. The drawing of the present invention shows a structure that the rubber part 60 surrounds all the portions of the flat spring member 50. However, the engagement of the rubber part 60 and the flat spring member 50 might change depending on various design conditions. For example, as shown in Figures 9 and 11, the rubber part 60 does not fully surround the flat spring member 50, namely, might surround in the direction of lengths of both ends in order to decrease the use of rubber.

The advantages to be obtained by using the structure that the outer sides of the flat spring member 50 are fully surrounded by the rubber part 60 help obtain antirust effect by fully blocking the flat spring member 50 from the outside. The processes might be improved by engaging the flat spring member 50 and the rubber part 60 in a mechanical engagement method, but the amount of use of rubber disadvantageously increases.

In the present invention, the formation position of the air pressure absorbing part 62 might change depending on the engagement and position relationship of the flat spring member 50 and the rubber part 60. The last pressure distribution control state transferred to the wiping part 61 might change depending on the position of the air pressure absorbing part 62, but since it is possible to obtain a pressure absorbing effect with the aid of the air pocket, it is possible to absorb and transfer the pressure to be evenly transferred to the wiping part 61 only by forming the air pressure absorbing part 62 between the flat spring member 50 and the wiping part 61 irrespective of the positions of the flat spring member 50 and the air pressure absorbing part 62, which means that the portion to which a strong pressure is applied is absorbed by means of the air pocket for thereby providing even pressure to the wiping part 61.

In the construction the air pressure absorbing part 62 is formed in order to make the pressure to be transferred to the wiping part 61 even, the absorbing force might be increased by adjusting the material or thickness of rubber to be proper to absorbing or the air pressure absorbing part 62 might be arranged at the normal axis with respect to the wiping part 61 not to form a deviation in the position of the air pressure absorbing part 62 or the air pressure of the air pressure absorbing part 62 is increased.

The construction that the outer sides of the flat spring member 50 is fully surrounded by rubber is advantageous to antirust effects in the flat spring member 50, and it is possible to manufacture in a process that the outer side is formed of rubber after the flat spring member 50 is inputted, while improving the forming performance of the air pressure absorbing part 62, and it is possible to prevent the air inputted in the air pressure absorbing part 62 from being discharged to the outside without installing the end cap 65.

The position formed at the rubber part 60 of the air pressure absorbing part 62 means a point direction in which the elastic force of the flat spring member 50 is applied to the wiping part 61, namely, a point where to absorb in the course that the elastic force of the flat spring member 50 is transferred to the wiping part 61 between the flat spring member 50 and the wiping part 61. It is possible to adjust the pressure of the flat spring member 50 with the aid of the air pressure absorbing part 62 by forming the air pressure absorbing part 62 at the rubber part 60.

The material or thickness of the rubber part 60 might be adjusted and optimized to absorbing function. For example, the interval between the flat spring member 50 and the air pressure absorbing part 62 might be freely changed in a range of the interval L1 of 0 to 10mm irrespective of the engagement of the rubber part 60 and the flat spring member 50.

As shown in Figures 8 and 9, the air pressure absorbing part 62 formed at the rubber part 60 is formed about the vertical axis S1 while being symmetrical in left and right directions, so that no deflection occurs about the vertical axis S1 passing through the center of the wiping part 61, and the lower side of the air pressure absorbing part 62 is formed so that the point P1 having the lowest height becomes the top. When the reversed angle shape is formed, which gets gathered about the vertical shaft S1, in order to make the elastic pressure absorbing operation become at the center, it is possible to more stably adjust the pressure when adjusting the uneven pressure to even pressure.

The width W3 of the air pressure absorbing part 62 formed at the rubber part 60 is smaller than the width W2 of the flat spring member 50 and is larger than the maximum width W1 of the close contact portion of the glass surface of the wiping part 61. The air pressure absorbing part 62 is included in the elastic pressure application range of the flat spring member 50, and all the pressure to be transferred to the wiping part 61 is applied via the air pressure absorbing part 62.

Here, when the air does not leak to the outside after it is stored in the air pressure absorbing part 62, namely, it remains stored therein, a strong cushioning force is obtained with respect to the strong elastic pressure.

When both end portions of the air pressure absorbing part 62 formed at the rubber part 60 are closed by means of the blocking part 64, the air is filled along with a strong cushioning force in a stable state, so the elastic pressure becomes even and is transferred to the wiping part 61.

The construction of the blocking part 64 for blocking both end portions of the air pressure absorbing part 62 might be formed in any structure which can block both ends. The end cap 65 might be inserted into the inner profile of the air pressure absorbing part 62 and might be assembled and manufactured in a counter shape, so it is possible to selectively block both ends of the air pressure absorbing part 62.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A flat vehicular wiper with a hydraulic shock-absorbing unit in a flat wiper which includes a rubber part coming close contact with a glass surface of a vehicle, and a flat spring member which is installed at the rubber pat and has a set elastic force so that the rubber part comes into close contact with the glass surface, comprising:
a wiping part which is formed at a lower side of the rubber part and comes into close contact with the glass surface, with the flat spring member being installed at an upper side of the wiping part of the rubber part, and with the rubber part being equipped with an air pressure absorbing part formed between a lower side of the flat spring member and the wiping part in a hollow space shape.

2. A flat vehicular wiper with a hydraulic shock-absorbing unit according to claim 1, wherein said rubber part surrounds all the portions of the flat spring member.

3. A flat vehicular wiper with a hydraulic shock-absorbing unit according to claim 1, wherein said air pressure absorbing part is formed symmetrically at left and right sides about the wiping part, with the width W3 of the same being smaller than the width W2 of the flat spring member and being larger than the maximum width W1 of the close contact portion of the glass surface of the wiping part.

4. A flat vehicular wiper with a hydraulic shock-absorbing unit according to claim 3, wherein said air pressure absorbing part passes trough in a cross section longitudinal direction of the flat spring member so as to evenly receive the pressure transferred by means of the flat spring member.

5. A flat vehicular wiper with a hydraulic shock-absorbing unit according to claim 4, wherein in order to prevent the leak of the air of the air pressure absorbing part, a blocking part is integral with the rubber part so as to block both end portions in a longitudinal direction of the air pressure absorbing part.

6. A flat vehicular wiper with a hydraulic shock-absorbing unit according to claim 4, wherein in order to prevent the leak of the air of the air pressure absorbing part, an end cap is engaged to both end portions of the rubber part so as to block both end portion in a longitudinal direction of the air pressure absorbing part.

7. A flat vehicular wiper with a hydraulic shock-absorbing unit according to claim 1, wherein an interval L1 of 0mm to 10mm is formed between the flat spring member and the air pressure absorbing part.

8. A flat vehicular wiper with a hydraulic shock-absorbing unit in a flat wiper which includes a rubber part coming close contact with a glass surface of a vehicle, and a flat spring member which is installed at the rubber pat and has a set elastic force so that the rubber part comes into close contact with the glass surface, comprising:
a heat part which is provided at an upper side of the rubber part and is inclined in the direction of a lower edge portion of the glass surface, and a wiping part is formed at a lower side of the rubber part while coming contact with the glass surface, wherein said flat spring member is installed at an upper side of the wiping part of the rubber part and is inclined toward the lower edge portion of the glass surface, and said rubber part includes an air pressure absorbing part which is formed between the lower side of the flat spring member and the wiping part in a hollow space shape.

9. A flat vehicular wiper with a hydraulic shock-absorbing unit of claim 8, wherein said rubber part surrounds all the portions of the flat spring member.

10. A flat vehicular wiper with a hydraulic shock-absorbing unit according to claim 8, wherein the width W3 of the air pressure absorbing part is smaller than the width W2 of the flat spring member and is larger than the maximum width W1 of the close contact portion of the glass surface of the wiping part.

11. A flat vehicular wiper with a hydraulic shock-absorbing unit according to claim 10, wherein said air pressure absorbing part passes trough in a cross section longitudinal direction of the flat spring member so as to evenly receive the pressure transferred by means of the flat spring member.

12. A flat vehicular wiper with a hydraulic shock-absorbing unit according to claim 11, wherein in order to prevent the leak of the air of the air pressure absorbing part, a blocking part is integral with the rubber part so as to block both end portions in a longitudinal direction of the air pressure absorbing part.

13. A flat vehicular wiper with a hydraulic shock-absorbing unit according to claim 11, wherein in order to prevent the leak of the air of the air pressure absorbing part, an end cap is engaged to both end portions of the rubber part so as to block both end portion in a longitudinal direction of the air pressure absorbing part.

14. A flat vehicular wiper with a hydraulic shock-absorbing unit according to claim 8, wherein an interval L1 of 0mm to 10mm is formed between the flat spring member and the air pressure absorbing part.
